# EUROPEAN PATENT APPLICATION

(11) **EP 2 386 849 A1**
(43) Date of publication of application: **16.11.2011**
(21) Application number: 10162386.6
(22) Date of filing: 10.05.2010
(51) Int. Cl.: G01N 25/56

(54) **Method, apparatus and computer program product measuring the condition of a concrete structure**

(71) Applicant: Fortum OYJ, 02150 Espoo (FI)
(72) Inventor: Englund, Marja, 02760, Espoo (FI)
(74) Representative: Söderholm, Sampsa Petteri

(57) **Abstract**

A method, apparatus and computer program product for causing a controlled change of temperature in a concrete structure, performing measurements before and after said controlled change of temperature with a full-length sensor traveling inside the concrete structure, and calculating based on the measurements the water content in a plurality of points of the concrete structure.

## Description

### FIELD OF THE INVENTION

The present invention generally relates to monitoring the condition of a concrete structure.

### BACKGROUND OF THE INVENTION

In large scale constructions quality assurance is highly important. For example, it is essential to verify that massive concrete structures, such as bridges or dams do not break down or fall, while they are in use.

The European patent application assigned to the same assignee as the present application and published under EP 1 496 352 A1 presents a method for monitoring the condition of a substantially homogenous physical structure, such as a concrete structure. That application presents an innovation in which temperature of the physical structure is measured by means of an optical fibre sensor, a controlled change of temperature is caused in the physical structure, and irregularities are detected is the measured temperatures. The irregularities indicate the presence of discontinuities or defects in the physical structure.

### SUMMARY

It has now been discovered that a method resembling the method described in EP 1 496 352 A1 can be applied to calculate water content of a concrete structure.

Excessive water content during the construction phase of a concrete structure can cause the concrete to become too porous. Excessively porous concrete can for example lead to the reinforcement inside the concrete being exposed to corrosive substances. This can deteriorate the structures' long-term durability. For example in underwater concrete structures the salt from seawater can be detrimental to the structure. Examples of underwater concrete structures are concrete structures that remain entirely underwater or have parts that remain underwater at least from time to time due to the seawater level variation etc., such as bridges or dams.

Additionally, the nature of the concrete construction method itself causes that in practice there is always some porosity in the concrete. The porosity in a concrete can be divided into capillary and air pores. It has been observed that once dried the concrete still contains water in a chemically absorbed form in the capillary and air pores. The relative humidity of concrete as measured with a prior art hygrometer is 100 % when the capillary pores have been filled. It has been observed that even after that the concrete can absorb water into its air pores. When the air pores become partly or entirely filled with water the risk of frost damage increases. The concrete itself and/or metal reinforcement will erode. In underwater concrete structures this can especially occur in regions in which the seawater level varies.

An object of the invention is to obtain information from the region in which the prior art hygrometer does not reaches. This can for example mean the region in which the capillary pores have already been filled and the water is increasingly absorbed into the air pores. As mentioned in the preceding the prior art hygrometer value of relative humidity in that region is basically always 100 %.

According to a first aspect of the invention there is provided a method, comprising: causing a controlled change of temperature in a concrete structure;
performing measurements before and after said controlled change of temperature with a full-length sensor traveling inside the concrete structure;
calculating based on the measurements the water content in a plurality of points of said concrete structure.

The variable that is measured depends on the implementation. In an embodiment, the variable measured is sensitive to temperature or temperature differences. In an embodiment, the variable to be measured either is temperature or another variable indicating temperature at least indirectly. In an embodiment, said variable is measured to obtain values in a plurality of points in said concrete structure. In an embodiment, the water content is calculated based on the difference observed between measurements performed before and after the controlled change of temperature in the variable to be measured. In an embodiment, the water content is calculated based on the difference, concerning the same location(s) in the concrete structure, observed between measurements performed before and after the controlled change of temperature in the variable.

By calculating water content instead of measuring relative humidity, it is possible to draw more accurate conclusions about the condition of the concrete structure. Accordingly, in an embodiment, the method comprises:
estimating the condition of the concrete structure based on the calculated water content.

By calculating the water content (or water content value) in a plurality of points the water content distribution in the concrete structure can be formed in accordance with an embodiment. This can be shown, for example, in a graphical presentation. In accordance with an embodiment, water content values calculated in a certain points can be compared with the water content values calculated in other points of the structure. The variation in the water content can be analysed and conclusions about the condition of the concrete structure can be formed and shown to the user. In accordance with an embodiment, water content values calculated in certain points of the structure can be compared with expected water content values in those points. Conclusions about the condition of the concrete structure can be formed based on any detected differences between the calculated and expected values.

In an embodiment, the method comprises measuring temperature and calculating the water content based on made temperature measurements.

In an embodiment, the water content is calculated based on observed temperature differences between measurements performed before and after the controlled change of temperature.

In an embodiment, temperature is measured in a plurality of points of the concrete structure and water content in these points is calculated based on observed temperature differences in those points between measurements performed before and after the controlled change of temperature.

In an embodiment, the method comprises:
calculating water content θ from the equation which is generally of the type θ = *A* / *Tₘ* + *B*, in which *Tₘ* denotes the maximum temperature raise at the measurement point in question between measurements, *A* is a constant depending on the parameters used in the measurement arrangement, and *B* is a constant depending on material parameters.

In an embodiment, the method comprises:
causing the controlled change of temperature by heating the concrete structure with a thermal cable traveling parallel to the full-length sensor at a constant distance from the full-length sensor in the concrete structure.

In an embodiment, the method comprises:
performing the measurements by sending a signal to the full-length sensor and measuring the signal received back from the full-length sensor.

The full-length sensor may be an optical fibre sensor.

According to a second aspect of the invention there is provided an apparatus, comprising:
temperature changing means configured to cause a controlled change of temperature in a concrete structure;
measurement means configured to perform measurements before and after said controlled change of temperature with a full-length sensor traveling inside the concrete structure;
calculation means configured to calculate based on the measurements the water content in a plurality of points of the concrete structure.

In an embodiment, the apparatus comprises:
estimation means configured to estimate the condition of the concrete structure based on the calculated water content.

In an embodiment, the measuring means are configured to measure temperature and the calculation means are configured to calculate the water content based on made temperature measurements.

In an embodiment, the calculation means are configured to calculate the water content based on observed temperature differences between measurements performed before and after the controlled change of temperature.

In an embodiment, the temperature changing means are configured to cause the controlled change of temperature by heating the concrete structure with a thermal cable traveling parallel to the full-length sensor at a constant distance from the full-length sensor in the concrete structure.

In an embodiment, the measurement means are configured to perform the measurements by sending a signal to the full-length sensor and measuring the signal received back from the full-length sensor.

In an embodiment, the full-length sensor is an optical fibre sensor. In an embodiment, the concrete structure is an underwater concrete structure or a concrete structure that has underwater parts that remain underwater at least from time to time.

According to a third aspect of the invention there is provided a computer program product comprising program code stored on a storage medium to be executed in an apparatus, and when executed, causing the apparatus to perform the method steps of the first aspect and its embodiments.

Embodiments of the invention enable monitoring the condition of concrete structures through water content calculations. The structures can be monitored over their whole lifecycle. In principle, monitoring can be continuous, that is, measurements are repeated periodically, or the measurements can be done only when they are considered necessary. Moreover, providing a timely and relatively accurate estimate of damages in physical structures is enabled.

Different non-binding exemplary aspects and embodiments of the present invention have been illustrated in the foregoing. Some embodiments may be presented only with reference to certain exemplary aspects of the invention. It should be appreciated that corresponding embodiments may apply to other aspects as well.

### BRIEF DESCRIPTION OF THE DRAWINGS

Embodiments of the invention will now be described by way of example with reference to the accompanying drawings in which:
- Figure 1: shows a flow chart illustrating a method according to an embodiment of the invention;
- Figure 2: shows a measurement system according to an embodiment of the invention;
- Figure 3: shows by way of example a visual presentation of an estimate for water content in a concrete structure; and
- Figure 4: shows a simplified block diagram of an apparatus according to an embodiment of the invention.

### DETAILED DESCRIPTION

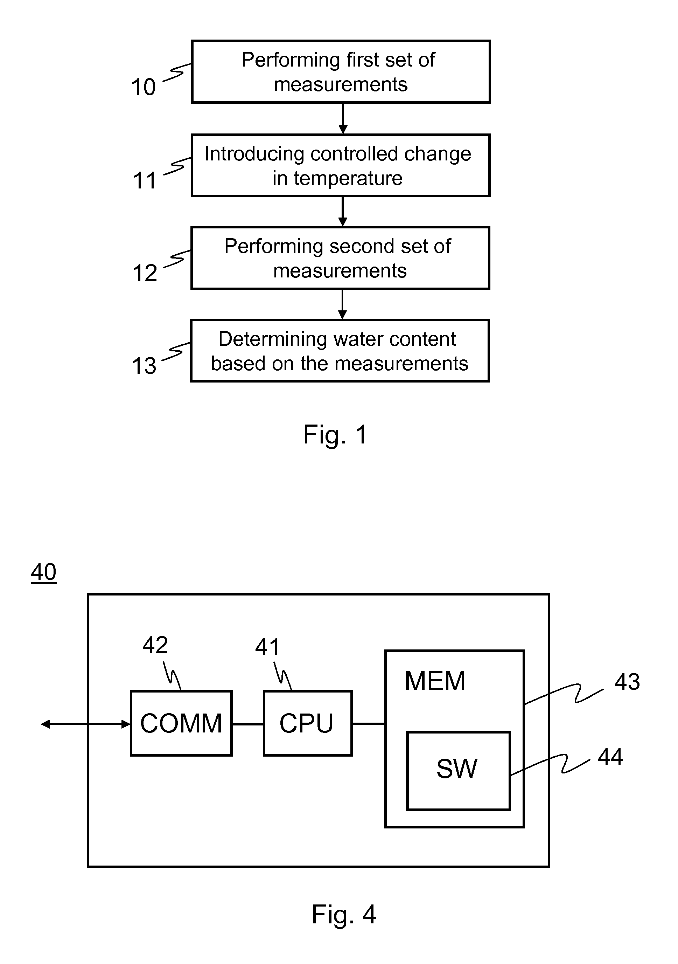

Figure 1 shows a flow chart illustrating a method according to an embodiment of the invention. It is assumed that a full-length sensor has been mounted inside a concrete structure (for example buried into the structure during cast of the concrete). In this embodiment, it is also assumed that a thermal cable has been similarly mounted inside the structure. The full-length sensor and the thermal cable are preferably mounted so that they travel inside the concrete structure with a constant distance from each other.

As described in EP 1 496 352 A1 an optical fibre sensor represents an example of a full-length sensor, since it can provide measurement results over its whole length. When an optical fibre is used as a sensor, the selection of materials of the optical fibre core and cladding is such that the variable to be measured has a controlled effect on the light travelling in the fibre. Then, changes in light intensity, phase, wavelength or polarisation can be used for determining the value of the variable to be measured.

A temperature measurement by means of an optical fibre sensor employs for example analysing Raman backscattered signals caused when a laser pulse is travelling in the optical fibre. A short laser pulse is sent into the optical fibre from one end of the fibre. As a result of spontaneous Raman scattering, anti-Stokes and Stokes photons are generated along the fibre. A fraction of these scattered photons propagate back and are detected by a photodetector. Especially the generation of anti-Stokes photons is sensitive to the temperature of the environment. Therefore, by means of analysing the backscattered Stokes and anti-Stokes photons, the temperature along the fibre can be determined. The point of the optical fibre in which a certain temperature value was measured can be identified on the basis of the speed of light and the time between sending the light pulse and detecting the backscattered photons. In order to obtain more than one sample for the measurement points, the light pulse is sent repeatedly and the repetition frequency is selected so that backscattered signals originated from different light pulses do not mix up.

In step 10, a first set of measurements is performed with the aid of the full-length sensor. The variable to be measured depends on the embodiment. In a preferred embodiment temperature is measured in a plurality of points of the concrete structure with the aid of an optical fibre sensor. Then in step 11, a controlled change of temperature is caused in the concrete structure. The change of temperature is a controlled change because it is performed in a controlled manner. This may mean for example that the amount of heat transferred into the structure can be controlled. Preferably the concrete structure is heated, but equally it can be cooled down. The change of temperature can be caused for example with the aid of the thermal cable assembled in proximity of the optical fibre sensor.

In step 12, a second set of measurements is performed with the aid of the full-length sensor. The variable to be measured is the same as in the first set of measurements. Accordingly, in a preferred embodiment temperature is measured in the plurality of points of the concrete structure with the aid of the optical fibre sensor.

In step 13 water content in a plurality of points of the concrete structure is calculated based of the first and second set of measurements. In a preferred embodiment in which said measurements involve temperature measurements (or measurements indicative of temperature either directly or indirectly) and the thermal cable is used as a heating source, water content θ in the concrete structure can be obtained from the equation which is generally of the type θ = *A* / *Tₘ* + *B*, in which *Tₘ* denotes the maximum temperature raise at the measurement point in question between measurements. In certain embodiments, *A* is a constant depending on the parameters used in the measurement arrangement, and *B* is a constant depending on material parameters. The actual values of *A* and *B* therefore depend on the implementation.

In further embodiments, the condition of the concrete structure is estimated based on the calculated water content. Different graphical representations may be generated and presented based on the calculated water content values. These include two-dimensional or three-dimensional result charts showing water content distribution within the concrete structure.

Based on the water content measurements (or calculations), limit values depending on the concrete structure in question are obtained. Comparing actual measured values to these limit values, the presence of a quality problem and the level of damage can be detected. Too low water content for example may be a sign of large air pores, even cavities, and defective casting, cracks, etc. Excessive water content indicates possible moisture problems that may lead to several concrete damages, such as frost damages and corrosion of concrete enforcement metal. A certain limit, depending on the concrete structure, indicates that both the capillary pores and the air pores have been filled. Water content values above that indicate for example that the structure (e.g., enforcement) is in water in most parts, or that there is water actually flowing through the structure. In graphical presentations, areas or volumes of the concrete structure exceeding or going under the limit values can be shown. The areas or volumes that are estimated problematic may be highlighted.

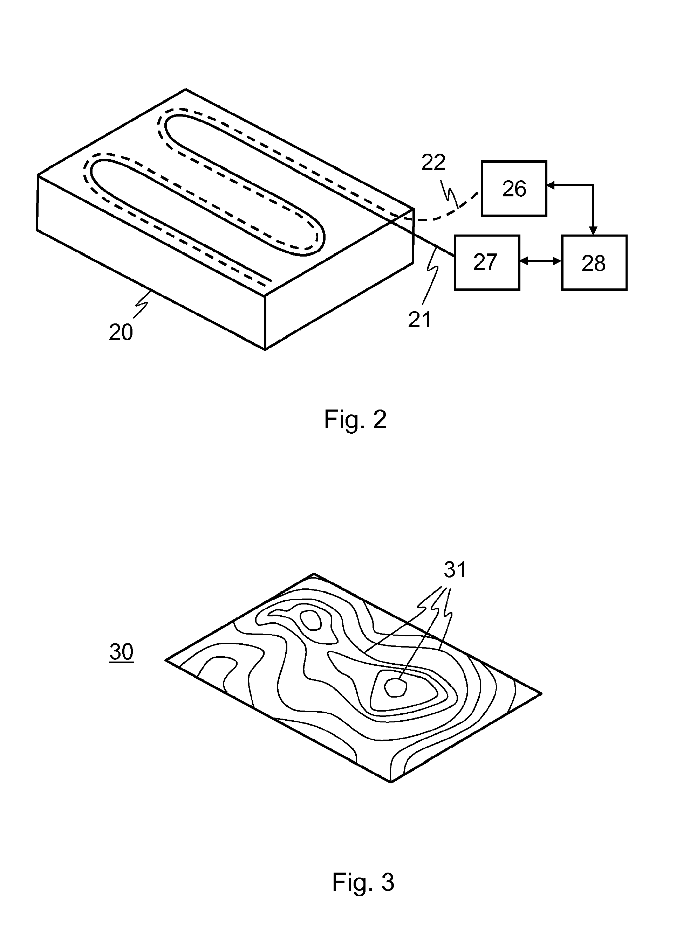

Figure 2 shows a measurement system according to an embodiment of the invention. Therein, the condition of a concrete structure 20, such as a bridge or a dam is monitored. The Figure 2 shows a cross sectional view of the concrete structure 20 showing an optical fibre sensor 21 as an example of a full-length sensor which has been assembled into the concrete structure 20. The optical fibre sensor 21 is bent to cover a cross sectional plane of the concrete structure 20 so that measurements can be performed with the optical fibre sensor 21 versus a location over the cross sectional plane. The optical fibre sensor 21 is coupled to a measurement unit 27, which is adapted to send a light pulse into the optical fibre sensor and to detect and analyse backscattered light from the sensor for determining a parameter value, temperature in a preferred embodiment, in different points of the concrete structure 20. The measurement unit 27 preferably comprises a source of light and a detector (not shown), which are functionally coupled to the optical fibre, and a signal processor (not shown) for providing the measurement results.

A thermal cable 22, for example a heat distribution pulse cable, is assembled next to the optical fibre sensor 21 within the concrete structure 20. The thermal cable 22 is bent similarly as the optical fibre sensor 21 so that its format conforms to the format of the optical fibre sensor.

The thermal cable is coupled to a temperature-controlling unit 26, which is adapted to send a heat pulse into the thermal cable in order to cause a change of temperature in the concrete structure.

The measurement unit 27 and the temperature-controlling unit 26 are both functionally coupled to a computing device 28, which comprises calculation unit (not shown) for calculating water content based on measurement results obtained from the measurement unit 27. These calculation unit is preferably implemented as a suitable combination of hardware and software components, for example as a processing unit and a computer program code executable in the processing unit.

The calculation unit calculates water content (or water content values) in a plurality of points of the concrete structure based on the measurements, temperature measurements in a preferred embodiment, performed before and after heating the concrete structure 20.

Preferably the computing device 28 also controls the measurement unit 27 and the temperature-controlling unit 26 in order to set the timing of measurements and heating as desired. The computing device 28, measurement unit 27 and temperature-controlling unit may be implemented separately or within a single device.

As the sensor combination formed by the optical fibre sensor 21 and the thermal cable 22 may be assembled layer-by-layer in the casting phase of the concrete so that there may be tens or hundreds or even thousands of meters cable within the concrete structure, the calculation unit can calculate water content in an extensive area or volume. Based on the water content calculation the calculation unit in an embodiment generates two-dimensional or three-dimensional result charts showing water content distribution within the concrete structure. In these result charts one can detect for example defective casting, rocket pockets and empty cavities. Figure 3 shows an example of a two-dimensional result chart. The lines 31 indicate water content contour lines along which water content has been estimated to be constant.

Figure 4 shows a simplified block diagram of an apparatus according to an embodiment of the invention, for example the computing device 28 depicted in Figure 2. The apparatus may be for example a general-purpose computer or some other suitable computing device or apparatus. It preferably comprises a suitable combination of software and hardware components. The apparatus 40 shown in Figure 4 comprises a processor 41 for controlling the operation of the apparatus and a memory 43 preferably including a work memory and a non-volatile memory (division not shown). The non-volatile memory is configured to store a computer program or software 44 in the form of a computer program code configured to cause the processor on execution to control the apparatus according to embodiments of the invention. The processor 41 may be configured to use the work memory to temporarily store the computer program code that is being executed.

The apparatus 40 further comprises a communication unit 42 such as a communication port or a mobile communication unit through which the apparatus communicates with other devices. Furthermore the apparatus 40 may incorporate either or both of the units 26 and 27 shown in Figure 3. Moreover, the apparatus may comprise a user interface, such as a display and keyboard (not shown).

The processor 41 may be a master control unit MCU. Alternatively, the processor may be a microprocessor, a digital signal processor, an application specific integrated circuit, a field programmable gate array, a microcontroller or a combination of such elements.

The computer program 44 comprises program code configured for controlling measurement means such as the measurement unit 26 and for controlling the temperature changing means such as the temperature-controlling unit 27 shown in Figure 2. The computer program 44 controls the measurement means to perform a first set of measurements, the temperature changing means to cause a controlled change of temperature in the concrete structure, and again the measurement means to perform a second set of measurements after the controlled change in temperature. Furthermore, the computer program 44 comprises program code for implementing a calculation unit or function calculating the water content in a plurality of points of the concrete structure based on the measurements.

The computer program may also comprise program code for outputting a graphical representation indicating the water content distribution in the concrete structure, program code for calculating limit values of the water content and showing areas or volumes in the concrete structure exceeding or going under these limit values by means of the graphical representation.

The foregoing description has provided by way of non-limiting examples of particular implementations and embodiments of the invention a full and informative description of the best mode presently contemplated by the inventors for carrying out the invention. It is however clear to a person skilled in the art that the invention is not restricted to details of the embodiments presented above, but that it can be implemented in other embodiments using equivalent means or in different combinations of embodiments without deviating from the characteristics of the invention.

Furthermore, some of the features of the above-disclosed embodiments of this invention may be used to advantage without the corresponding use of other features. As such, the foregoing description shall be considered as merely illustrative of the principles of the present invention, and not in limitation thereof. Hence, the scope of the invention is only restricted by the appended patent claims.

## Claims

1. A method, comprising:
causing a controlled change of temperature in a concrete structure;
performing measurements before and after said controlled change of temperature with a full-length sensor traveling inside the concrete structure;
calculating based on the measurements the water content in a plurality of points of the concrete structure.

2. The method of claim 1, comprising:
estimating the condition of the concrete structure based on the calculated water content.

3. The method of any preceding claim, comprising:
measuring a variable directly or indirectly indicating temperature, and calculating the water content based on the measurements of said variable.

4. The method of any preceding claim, comprising:
calculating water content θ from the equation which is generally of the type θ = *A* / *Tₘ* + *B*, in which *Tₘ* denotes the maximum temperature raise at the measurement point in question between measurements, *A* is a constant depending on the parameters used in the measurement arrangement, and *B* is a constant depending on material parameters.

5. The method of any preceding claim, comprising:
causing the controlled change of temperature by heating the concrete structure with a thermal cable traveling parallel to the full-length sensor at a constant distance from the full-length sensor in the concrete structure.

6. The method of any preceding claim, comprising:
performing the measurements by sending a signal to the full-length sensor and measuring the signal received back from the full-length sensor.

7. The method of any preceding claim, wherein the full-length sensor is an optical fibre sensor.

8. An apparatus, comprising:
temperature changing means configured to cause a controlled change of temperature in a concrete structure;
measurement means configured to perform measurements before and after said controlled change of temperature with a full-length sensor traveling inside the concrete structure;
calculation means configured to calculate based on the measurements the water content in a plurality of points of the concrete structure.

9. The apparatus of claim 8, comprising:
estimation means configured to estimate the condition of the concrete structure based on the calculated water content.

10. The apparatus of any preceding apparatus claim, wherein
the measuring means are configured to measure a variable directly or indirectly indicating temperature and the calculation means are configured to calculate the water content based on the measurements of said variable.

11. The apparatus of any preceding apparatus claim, wherein
the temperature changing means are configured to cause the controlled change of temperature by heating the concrete structure with a thermal cable traveling parallel to the full-length sensor at a constant distance from the full-length sensor in the concrete structure.

12. The apparatus of any preceding apparatus claim, wherein
measurement means are configured to perform the measurements by sending a signal to the full-length sensor and measuring the signal received back from the full-length sensor.

13. The apparatus of any preceding apparatus claim, wherein the full-length sensor
is an optical fibre sensor.

14. The apparatus of any preceding apparatus claim, wherein the concrete
structure is an underwater concrete structure or a concrete structure that has underwater parts that remain underwater at least from time to time.

15. A computer program product comprising program code stored on a storage
medium to be executed in an apparatus, and when executed, causing the apparatus to perform the method steps of any preceding method claim.
